(19)

**Europäisches Patentamt**
**European Patent Office**
**Office européen des brevets**

(11)　**EP 1 583 671 B1**

(12)　　　　　**EUROPEAN PATENT SPECIFICATION**

(45) Date of publication and mention
of the grant of the patent:
**07.08.2013  Bulletin 2013/32**

(51) Int Cl.:
**B60C 23/06** *(2006.01)*　　**B60C 23/04** *(2006.01)*
**G01L 5/04** *(2006.01)*

(21) Application number: **04703297.4**

(86) International application number:
**PCT/SE2004/000062**

(22) Date of filing: **19.01.2004**

(87) International publication number:
**WO 2004/065145 (05.08.2004 Gazette 2004/32)**

(54) **SENSOR ARRANGEMENT**

SENSORANORDNUNG

SYSTEME DE DETECTION

(84) Designated Contracting States:
**AT BE BG CH CY CZ DE DK EE ES FI FR GB GR
HU IE IT LI LU MC NL PT RO SE SI SK TR**

(30) Priority: **17.01.2003  SE 0300127
17.01.2003  US 319874 P**

(43) Date of publication of application:
**12.10.2005  Bulletin 2005/41**

(73) Proprietor: **Vasasensor AB
411 33 Göteborg (SE)**

(72) Inventors:
 • **KROZER, Anatol**
**S-413 17 Göteborg (SE)**
 • **JOHANSSON, Christer**
**S-413 24 Göteborg (SE)**
 • **JOHNSSON, Sofia**
**SE-412 62 Göteborg (SE)**

 • **WETTER, Brodde**
**SE-411 26 Göteborg (SE)**
 • **DANIELSSON, Henrik**
**SE-412 80 Göteborg (SE)**
 • **PERERS, Gustav**
**SE-411 26 Göteborg (SE)**

(74) Representative: **Fritsche, Daniel et al
Awapatent AB
Södra Hamngatan 37-41
Box 11394
404 28 Göteborg (SE)**

(56) References cited:
**EP-A1- 0 887 211　　WO-A1-00/58704
WO-A1-01/68388　　DE-A1- 3 741 700
FR-A- 2 580 997　　FR-A1- 2 592 954
GB-A- 1 596 284　　US-A- 5 953 230**

Printed by Jouve, 75001 PARIS (FR)

**Description**

TECHNICAL AREA

The present invention relates to a system and method for detecting characteristics of an elastic structure, which is provided with at least one sensor and the system comprises at least one detector

DESCRIPTION OF STATE OF THE ART

Cylinder shaped bodies, e.g. tyres and other structures, which are manufactured of rubber, synthetic or organic material or the like, are deformed because of the contact with another surface. Moreover, the characteristics and functions of different structures are deteriorated in course of time.

Besides cylinder shaped bodies, the characteristics of a flat body, such as a sheet material, e.g. paper, paper board, fabric or conveyer, such as wire felt belt or paper machine clothing are of special interest.

Different methods and devices have suggested for detection of deformation, e.g.: WO 00/02741 discloses a method and an apparatus for counting the revolutions of a pneumatic tyre utilizing a sensor, which responds to the periodic mechanical stresses when the tyre rotates under load on a load-bearing surface such as a roadway. The sensor can be constituted of a piezo-element, electrically connected to a revolution counting module. The piezo-element is suitably attached to or embedded within the inner wall of the tyre, under the tread or the side wall, in a way which causes it to flex with the tyre each time the circumferential sector of the tyre containing the piezo-element is compressed against the road or another vehicle supporting surface.

US 6,105,423 discloses a sensor comprising a piezo-electric bar for detecting rotations of a pneumatic tyre on a vehicle. The piezo-electric bar is effectively fixed at its two ends, which ends are also attached to two spaced apart points on the inner surface of the tyre tread by means of adhesive. The centre of the piezo electric bar is attached to the centre of the base, and then to the inner surface of the tyre, at a point midway between said end points of the bar. Thus, when the tyre tread is flattened in the contact patch from its normal curved shape, the centre of the bar is radially moved inwards with respect to the fixed point at its ends. An electrical circuit block processes the signal so that an output pulse is produced only for radially inward movement of the contact point.

US 4,862,486 discloses an apparatus comprising a piezoelectric polymer sensor, which senses a change in stress when a given section of the tyre is stressed with each revolution. The piezoelectric polymers are comprised of aligned dipoles acting to apply and release stresses on the piezoelectric polymer sensor when stressing the tyre. The apparatus is mounted to the inner sidewall of the tyre.

JP 04254730 A discloses a device for monitoring tyre air pressure, which allows the tyre pressure to be detected constantly while an ambient environment of the tyre is stable against fluctuation. The device comprises a piezo-electric element, of which the impedance changes according to an air pressure of a tyre, and a rim-side coil is changed by a fluctuation of an ambient environment of the tyre as well.

US 5,546,070 discloses the use of a piezo ceramic element simultaneously as a sensor and also as an energy source for a capacitor to supply a transmission unit.

DE 197 45 734 A1 shows a sensor for detecting and registering the wear and the tread of a tyre. The tyre comprises single elements, however, which are not dispersed. In FR 2645799 a magnetic mass is arranged at a specified depth of the tyre, and consequently, can be supervised.

US 5,559,437 relates to methods and apparatus for checking the condition of worn tyres, e.g. before recapping, for the non-destructive verification of the condition of a metallic reinforcement element of worn tyres. US 6,005,388 relates to methods for detecting defects in tyres.

Common for prior art for detecting the characteristics of flat structures when passing one or several cylindrical bodies is arranging sensors in the cylindrical body itself, example of such a prior art includes: WO 02/066239, US 5,562,027, US 2003/0144119, EP 0538 221, DE 199 20 133, WO 03/027623, US 5,821,433 and US 6,370,961.

To summarise, main difference between the present invention and prior art is that present invention uses capacitive and/or inductive transmission of signals from a sensor to a detector, which eliminates need for energizing elements for sensors and antennas.

GB 1 596 284 discloses a signalling device including a body of piezo-electric material coupled to a resonant tuned circuit such that when a pressure is applied to said body, a signal is radiated at a predetermined frequency determined by the characteristics of the tuned circuit.

SUMMARY OF THE INVENTION

It is an object of the present invention to provide an arrangement for determining the condition of a flat or substantially cylindrical body, being resilient (deformable), particularly a rotateble body or structure. The condition comprises mainly the deformation of the material.

Preferably, the substantially cylindrical resilient rotating body is a tyre, or a part thereof, and the arrangement is used for example, to determine the movement, e.g. revolution, which aids to determine velocity of a vehicle, the skid characteristics, the air pressure, etc.

Yet, another object of the present invention is to provide an arrangement for determining the condition of a substantially cylindrical rotating body in an apparatus and an associated structure, and the combination thereof as well. Preferably, in this case the cylindrical rotating body can be a roll or a cylinder for feeding a sheet material, such as paper. In this case, the arrangement is used for e.g. determining the movement and presence of the material, rotation speed, sliding characteristics.

Moreover, using sensors comprising a piezo-electric plastic or polymer material, according to one main aspect of the invention, gives certain advantages such as possibility for having larger detector elements. Moreover, the piezo-electric plastic material is less expensive than piezo-electric ceramic material. Furthermore, the piezo-electric plastic material can provide larger tensions and effects than the piezo-electric ceramic material as well. Yet, the two main advantages are the anisotropic characteristics of a piezo-elastic plastic material being utilized in the invention and the non-brittleness (plasticity).

According to one most preferred aspect of the invention, it is used as a detector for measuring the nip force, nip pressure and/or nip width of rolls in a nip roll press, for example for manufacturing a sheet material such as paper.

However, the invention can also be provided with additional types of sensors in form of a magnetic material being dispersed and disintegrated in the structure to be measured, or a magneto-elastic material in form of thin foils or the like.

BRIEF DESCRIPTION OF THE DRAWINGS

In the following the invention will be described with reference to the embodiments illustrated in enclosed drawings, in which:

Fig. 1a      is a schematic cross-sectional view of a first application employing a device according to the invention,
Fig. 1b      is a schematic frontal view of the first application employing a device according to the invention,
Fig. 2       is a cross-sectional view of a second application employing a device according to a second aspect of the invention,
Fig. 3       is a schematic cross-sectional view of a third application employing a device according to the third aspect of the invention,
Fig. 4a      is a schematic side view of an arrangement comprising a device according to a fourth embodiment of the invention,
Fig. 4b      is frontal view of the arrangement according to Fig. 4a,
Fig. 5a      is a schematic side view of an arrangement using a device according to a fifth embodiment of the invention, and
Fig. 5b      is a schematic side view of an arrangement according to a sixth embodiment of the invention.
Figs. 6-8    illustrate equivalence circuit schemes,
Fig. 9       is a schematic view of seventh embodiment,
Fig. 10      illustrates an equivalence circuit scheme,
Fig. 11      is a cross-sectional view through a conveyer encapsulating an arrangement according to the invention,
Fig. 12      is a lateral view of a part of a conveyer according to Fig. 11,
Fig. 13      is a cross-sectional view through a conveyer encapsulating an arrangement according to another aspect of the invention, and
Fig. 14      is a cross sectional side view through a conveyer encapsulating an arrangement according to one embodiment of the invention.

DESCRIPTION OF PREFERRED EMBODIMENTS

To sum up the invention, all exemplary embodiments of the sensors described in the following, may be made of different materials, for example:

- Piezoelectric material, which generate charge upon deformation. The charge can be transferred into a signal (voltage and/or current). The signal can be detected by external means (electric antennae) or it may drive a low power amplifier, which enhances the signal. This amplifier can be placed within the body itself. An external device can detect the amplified signal.
- Magnetic material (permanently magnetic), e.g. a strip or magnetic particles.

• Magneto-elastic material, which changes its magnetization upon deformation.
When the deformed material returns to its non-deformed state the magnetization returns to its initial state. A magnetic antenna, for example suitable coils, can detect the magnetic material.

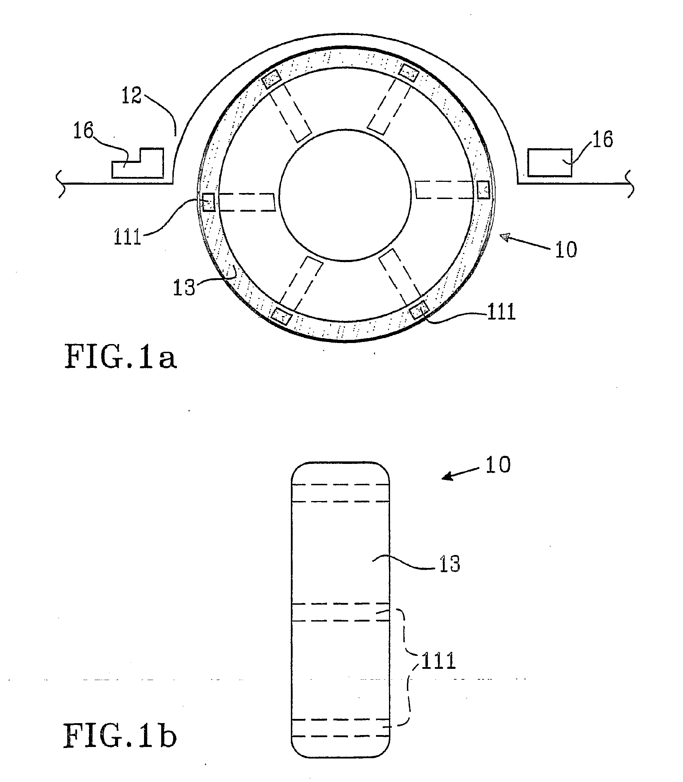

In the first application, a substantially cylindrical rotating body 13 is schematically shown in Figs. 1a and 1b. In this case, the body 13 comprises a wheel 10 of a vehicle 12, comprising the tyre 13. A number of sensors 111, for example six, are arranged on/in the tyre 13 or embodied into the tyre material. The tyre 13 is of a conventional type and made of an organic, resilient, elastic, rubberised material. The sensors 111 can preferably be arranged inside the metallic reinforcement or on the surface of the tyre 13.

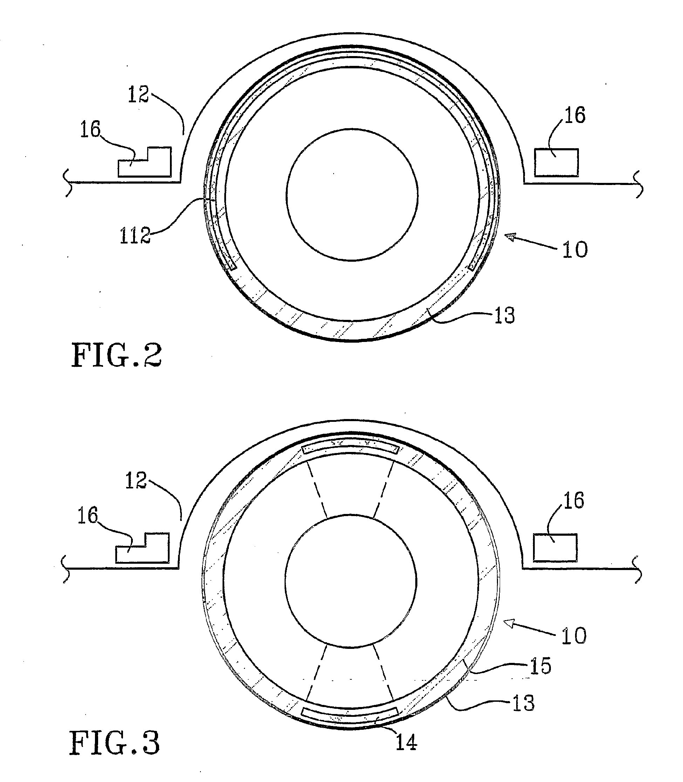

In Fig. 1b, each sensor 111 is strip-shaped and arranged substantially in the axial direction of the tyre 13, but may also extend in the radial direction (Fig. 1a). However, in a second application according to Fig. 2, another type of sensor 112 is arranged in the longitudinal, peripheral direction of the tyre 13.

The sensors 111 and 112 consist of a piezo-electrical polymer material or of a magneto elastic material. During the rotation of the tyre, as a result of the contact between the tyre 13 and the ground, the tyre 13 is locally elongated, particularly in the contact zone between the tyre 13 and the ground. Thus, an elongation of the tyre 13 results in an elongation of the sensor element in close proximity of the part of the tyre that has contact with the ground and generation of a signal. After a short while, the element relaxes back to its original shape and signal is zeroed. Then the next strip is deformed and so on. Typically, the speed of about 100 km/h, and a wheel with radius of about 0.5m (at the place of the strip) and provided with six strips gives a frequency of about 1 kHz.

The signals can be generated when both sides of the elongated sensor 111 are short-circuited by means of an appropriate resistance (not shown).

A magnetic detection is also possible, e.g. by creating a magnetic path formed as an appropriate coil on the tyre, which can be used for generating a pulsed magnetic field, which e.g. can be detected by an antenna arranged in connection with the vehicle body. The signal receiver is an important part of such an antenna, which can be arranged as another coil being charged when a magnetic field is generated by the coil in the tyre 13. Additionally, this arrangement can be arranged inside the metal reinforcement in the tyre 13 as well.

Another possibility is to use a magneto elastic material, which acts somewhat similar to the piezoelectric material. It changes its magnetization when deformed and returns to its initial magnetization when the deformation relaxes to equilibrium. Again, in this case an appropriate magnetic detection on the body of the vehicle may be used.

However, on the contrary, the sensor 112 in the second embodiment as shown in Fig. 2, elongates during the time the part of the tyre that contains the sensor has contact with the ground. During that time interval, an electric signal is created. The linear velocity of rotation can be obtained if the length of the strip is known simply by dividing this length by the duration of the voltage/current pulse.

Additional information is provided by the frequency at which the pulses occur due to the rotation of the vehicle. Both are related to each other and to the linear velocity of tyre motion. The difference in linear velocity of the tyre calculated from the pulse duration and from the frequency of tyre rotation (which is proportional to the angular speed of tyre rotation from which linear velocity of tyre motion can be calculated assuming certain tyre diameter, for example the diameter the tyre has at an appropriate air pressure) using appropriate software should be constant. When the difference is not constant but varies in time it signals that the skid did take place.

Yet another way to determine whether the skid occurred, or not, is to compare the readings (frequency or the time interval) obtained from the arrangements placed on other wheels to each other. The sensor readings give identical velocities of each of the wheels when the movement with no-skid takes place. When the skid takes place the readings obtained from the skidding wheel(s) will differ from the reading obtained from the non-skidding wheel(s).

In addition, small and slowly varying difference signals that the air pressure is not correct since this changes the tyre diameter and thus the difference in the linear velocity determined by each of the methods, respectively.

In the third embodiment of the invention, the sensor 14 is arranged inside the tyre material, see Fig. 3. In this case, the sensor 14 is made of a magnetic material, which is dispersed and disintegrated in the material of the tyre 13, and preferably arranged, in a top layer of the tyre 13. The magnetic sensors 14 are arranged spaced apart (distance 15) inside the material of the tyre 13. As the tyre 13 wears out results are: (1) the amount of the magnetic material decreases, and (2) the distance between the tyre 13 and a preferred detector means, which detector means is to be explained in the following.

In all aforementioned embodiments, one or several detector means 16 for detecting the sensors 111, 112 and 14 (or a signal from the sensors) are arranged and generate a signal. Preferably, the detectors 16 are arranged inside a wheel housing in a conventional vehicle close to the tyre 13. Advantageously, two detectors 16 are arranged on each side of the tyre 13 to be measured, and at a specified distance from each other.

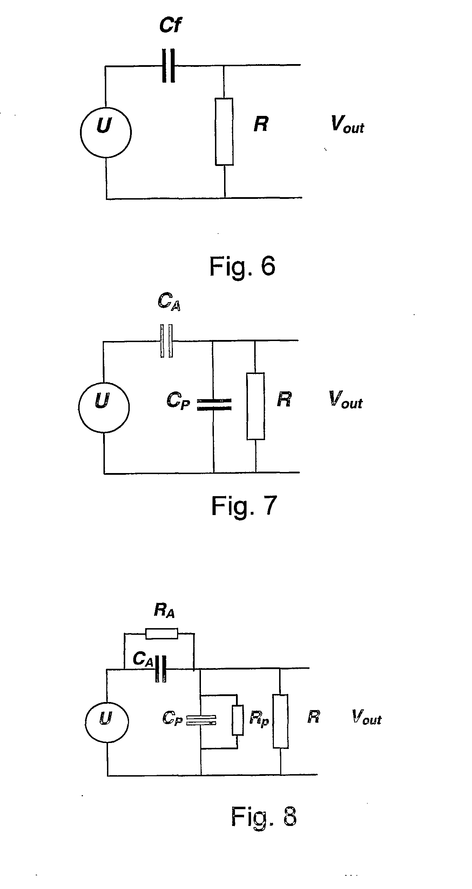

Most preferably, the signal generated by the sensors is transmitted to the detector using capacitive and/or inductive transmission as disclosed in the embodiments of Figs. 6-14.

The arrangements 10 according the first and the second embodiments of the invention are used for indicating movement. In addition, the atmospheric pressure can also be measured; since the sensor 112 is elongated the tyre 13 is deformed due to air pressure.

Note however that using only a radially placed strip as in Fig. 1a or only a longitudinally placed strip as in Figs. 2 or 3 does not allow one to determine a slow pressure reduction in the tyre during normal use since the piezoelectric materials are not sensitive to slow deformation rates.

In the second embodiment, the velocity is obtained by indicating the time intervals between the sensors 112, contacting the ground and the length of the strip-shaped sensors 112.

Furthermore, for obtaining the spin characteristics of the vehicle wheel, it is also possible to compare the axial frequency of the wheel to the frequency of the ground contact. If these frequencies are different, spinning may occur.

In the third embodiment, the material characteristics, e.g. the amount of the magnetic material in the tyre 13 is indicated. The signal intensity strength declines as the amount of the magnetic material 14 decreases and the distance between the tyre 13 and the detector means 16 increases, whereby the wear can be determined.

Clearly, in above-mentioned examples, the wheel can be substituted with any rotating structure.

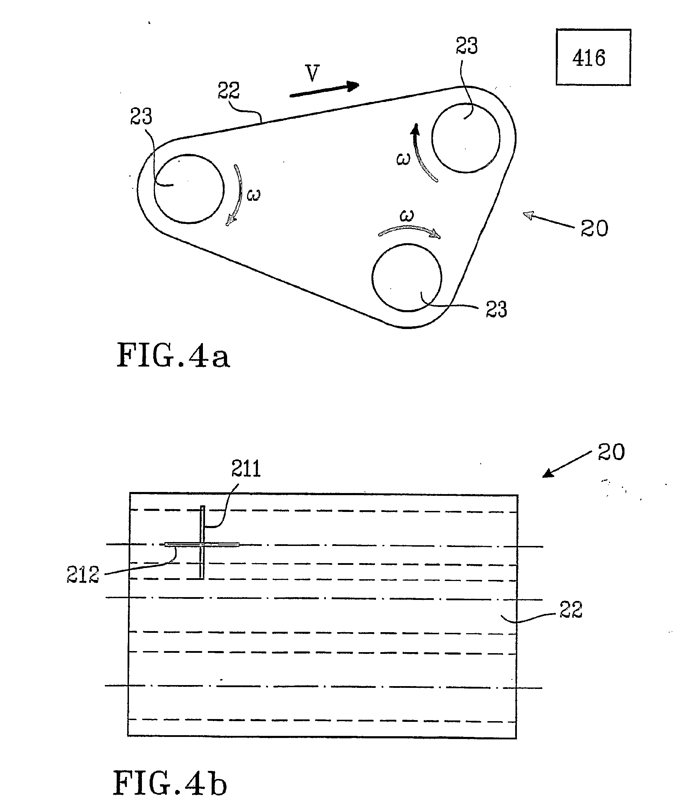

In the following, the arrangements 20 and 30 according to additional embodiments of the invention for determining the condition and the characteristics of a material are described in conjugation with schematic Figs. 4-5b, which relate to application of a sheet material production such as paper. In the embodiments, the condition and the characteristics mainly refer to the presence of material and the movement as well.

The arrangements 20 and 30 comprise at least one substantially cylindrical rotating body, which in the following denoted rolls 23 and 33. Structures 22 and 32 are arranged to cooperate/interact with the rolls 23 and 33. In this case, the structure 22 and 32 can be a wire, belt, paper sheet, banknotes, paper money or the like. Furthermore, the structures 22 and 32 are arranged adjacent to the rolls 23 and 33; however, in some cases the structures 22 and 32 can partially or completely be arranged at least partly in contact with the rolls 23 and 33.

In Fig. 4a, a belt or a conveyer 22 extends between three rolls 23 in a paper-manufacturing machine, for example. Sensors 211 and 212 are arranged inside the material of the belt 22, as shown in a lateral view in Fig. 4b. In this case, the sensors 211 and 212 are integrated into the belt 22, either in the longitudinal direction of the belt 22, and/or in the transverse direction of it. The sensors 211 and 212 may consist of wires of a piezo-electrical polymeric material or a magneto-elastic material (which may or may not be covered by a suitable polymer). Moreover, at least one detector 416 can be arranged in connection with the sensors 211 and 212 and the paper- manufacturing machine.

During the operation of the paper-manufacturing machine, the sensors 211 and 211 are subjected to additional compression and elongation as the belt 22 passes the rolls 23. If the sensors 211 are arranged in the transverse direction of the belt 22, the frequency of the obtained pulses is measured when the sensors 211 is subjected to an additional tension. The frequency is proportional to the velocity, and the velocity of the roll 21 can easily be calculated by means of appropriate software. Alternatively, if the sensor 212 is arranged in the longitudinal direction, the absolute linear rotation speed of the rolls 23 is measured in substantially the same way as described above in connection with tyres, and subsequently converted to a frequency, which is then compared to the frequency of the belt 22.

Thus, the speed of the belt 22, which should be constant, can be measured for ensuring that it does not slide on the rolls 23. The speed of the belt 22 can also be measured in relation to the rotation speed of the rolls 23. In this way it is possible to detect if the belt 22 slides on the rolls 23, which in turn indicates that the belt 22 is exhausted, probably due to its elongation, and should be replaced.

In this embodiment, it is also possible to use magnetic particles as an alternative to the piezo-electrical polymeric material. The magnetic particles are woven into the transverse or longitudinal threads in the same way as described above. Consequently, the primary signal is not an electrical pulse but a magnetic field pulse. Magnetic field pulses can be detected by means of, e.g., a hall-sensor or a coil. Furthermore, a pulsed magnetic field results in current pulses in the coil. It is also possible to use a substantially magneto-elastic material in the threads; whereby an elastic deformation of the threads will give rise to a magnetic field change.

Naturally, this embodiment can also be used in other applications involving stretching a material, such as a cloth or a fabric, wherein the movement can be controlled by means of rolls.

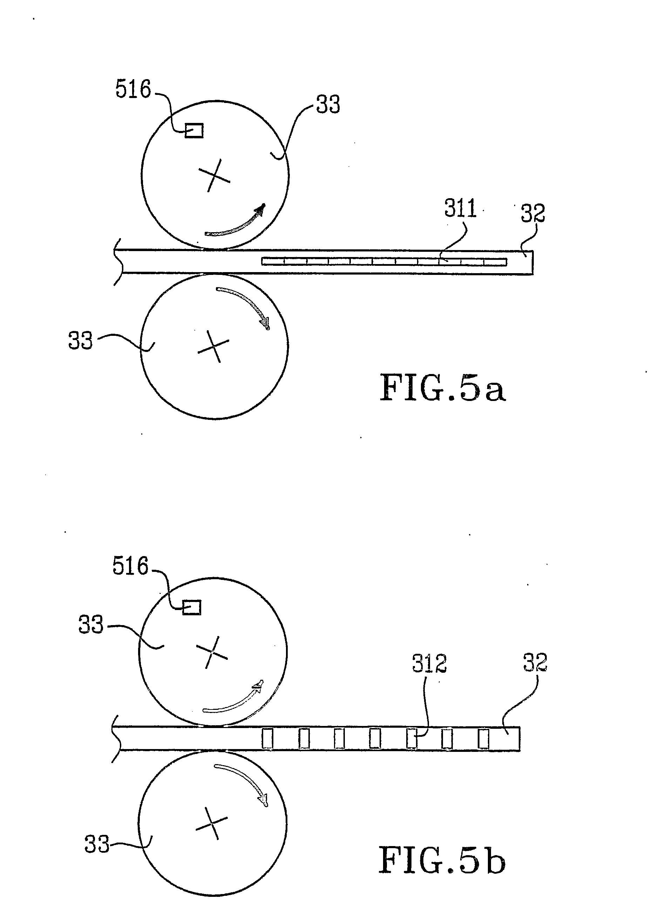

In a fifth embodiment, which is shown in Fig. 5a, two rolls 33 are preferably arranged in a printer application 20 for feeding paper sheets (or other information carrier). At least one sensor 331 is arranged on the surface of the printing paper, or substantially within the printer paper 32. In the preferred embodiment, the sensor 331 comprises a foil integrated substantially inside the paper 32. At least one detector 516 can be arranged to detect the presence of the sensors.

In this case, the movement is indicated in form of, e.g. interruptions in the printer, which are possible to predict if the velocity of a paper moving through the printer i rolls and the velocity of the printer rolls are known.

Yet another preferred embodiment in form of a banking paper application for the feeding of bank notes, paper money or the like is shown in Fig. 5b, which is principally designed as the printing application described above. The difference is that at least one sensor 312 is arranged as a strip. Preferably, several sensors 312 constitute a bar code in the banking paper or paper money 32.

In the latter applications, the bank notes and paper money pass between the rolls 33, which read the frequency of the pulses generated because of the sensors. Then, the frequency is determined by means of the distance between the sensors 312 and the speed with which the feeding arrangement, i.e. the rolls 33, feed the banknote(s). If the bank notes or the paper money are forgeries, the sensors may not be present or the distances between the bar codes 312 will vary, which causes change of the frequencies. Thus, in this case a presence (existence/availability) of material in form of sensors 312 is indicated, and not the movement characteristics.

As mentioned, it is also possible to replace the piezo-electrical polymer material with magneto elastic material in all the embodiments mentioned above. Then the sensors should preferably be shaped as thin foils. An elongation or a compression of the foil causes a local variation in magnetization, which fades away when the material retains to its original shape.

Thus, in the first mentioned embodiment, the body 13 can be comprise of complete or parts of tyres arranged, rolls, rollers, cylinders, delivery bowls, rubber-covered cylinders, drums, hole cylinders, etcetera in other applications such as conventional rolls in all types of machines, e.g. paper making machines, printers, banking paper applications for bank notes and paper money including rolls, and arrangements of rubberised materials in general in other embodiments of the invention.

The sensors 111, 112, 14, 211, 212, 311 and 312 can comprise a strip-shaped band, a foil, a thread, a particle or the like. Furthermore, the detector means 16 is preferably constituted of coils, transponders or the like. Finally, it is also possible to put sensors 111, 112, 211, 212, 311 and 312 perpendicular to each other for obtaining an absolute velocity, i.e. independent or the radius of the substantially cylindrical body 13, 23, 33.

The embodiments of Figs. 5a and 5b also can realise a nip formed by the rolls 33 and a conveyer shaped structure 32, such as a shoe press, wire, felt or band. Sensors 311 are arranged inside the structure 32 providing a receiver with information about the pressure and pressure distribution in the nip between the rolls. A most preferred application is for example in the nip roll, roller press, Yankee machine, shoe press, smoothing coating machine of a paper-manufacturing machine or any other apparatus for applying a pressure to a structure passing there through.

Most preferably, the sensor can be made of a polymeric piezoelectric material, such as PVDF, polyvinylidenfluoride. The sensors may be shaped as films, cables, threads and filaments etc., depending on the application area.

The basic idea is that when a piezoelectric material having two electrodes is subjected to a pressure, a potential variation is obtained as an output signal between the electrodes. An equivalent circuit for a piezoelectric polymer sensor is illustrated in Fig. 6, which realises the piezoelectric polymer sensor as a high-pass filter with a characteristic cutoff frequency, $f_0$:

$$f_0 = \frac{1}{2\pi RC_f} \qquad (1)$$

When a load is applied to the piezoelectric sensor a charge displacement is obtained in the polymeric piezoelectric material, which gives rise to a voltage U that is directly proportional to the force loading the sensor. The capacitance $C_f$ is the result of the dielectric material between the two electrodes and its value depends on the sensor type (film, wire), its dimensions and the relative dielectric constant of the material used. R is the total resistance comprising the polymer material resistance and input resistance of a measuring unit.

When measuring the output signal $V_{out}$ is measured but U, which provides the force on the sensor, is the interesting value. Having $V_{out}$, U is obtained through:

$$V_{out} + RC_f \frac{dV_{out}}{dt} = RC_f \frac{dU}{dt} \qquad (2)$$

$$V_{out} = U \frac{j\omega RC_f}{1 + j\omega RC_f} \qquad (3)$$

If the entire sensor is not loaded, the polymer capacitance is divided in a capacitance, which corresponds to the loaded area, $C_A$, as illustrated in the circuit diagram of Fig. 7. $C_P$ corresponds to the non-loaded part.

Due to the dielectric losses on the PVDF material, an apparently frequency dependent resistance and capacitance can be obtained, if the sensor is contemplated between the sensor electrodes is contemplated. This effect must be considered to be able to obtain a complete transfer function from the force load of the sensor to the output signal from the sensor system. The frequency dependent of the resistance and capacitance can be realised by inserting resistances $R_A$ and $R_P$ parallel to $C_A$ and $C_P$, as illustrated in the circuit diagram of Fig 8. Wherein:

$$R_A = \frac{1}{\omega C_{0A} \varepsilon''}, R_P = \frac{1}{\omega C_{0P} \varepsilon''}, \ C_A = \varepsilon' C_{0A} \ \text{and} \ C_P = \varepsilon' C_{0P}$$

wherein $\varepsilon'$ and $\varepsilon''$ are the real and the imaginary part of the relative permittivity for the dielectric material (such as PVDF), $C_{0A}$ and $C_{0P}$ are the capacitances of the sensor without dielectric material and $\omega$ is the frequency.

This circuit will block signals at sufficient enough high frequencies, i.e. a band pass filter.

Having integrated the sensors in the conveyer, for example, the signals must be detected and transmitted to a processing unit. According to one preferred embodiment of the invention, it is achieved by contactless communication.

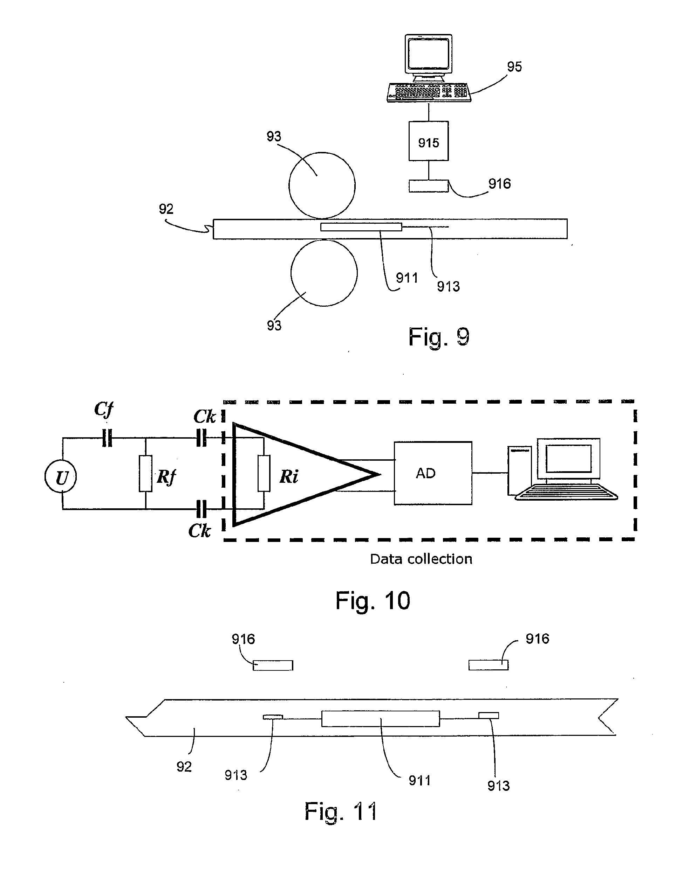

Fig. 9 illustrates an embodiment of the invention for detecting $V_{out}$. A conveyer 92 extends between two (nip) rolls 93. The conveyer is incorporated with a number of piezoelectric sensors 911 (only one illustrated for simplicity reason). Two conductors 913 are arranged as antennas connected to the outputs of the piezoelectric sensor. For receiving the transmissions from the antennas 913, a receiver antenna 916 is arranged adjacent to the conveyer. Preferably, the receiver antenna 916 comprises two conductive plates. The conductive plates are then connected to a receiver 915, comprising a differential amplifier and a analogue-digital converter (ADC), in which the received analogue signals from the antennas are converted to a digital signal by sampling with a predetermined rate and transmitted to a signal processing unit, for example in a computer 95. Clearly, the receiver 915 can be integrated in the computer 95. The result of the processed signal corresponds to the force, to which the piezoelectric sensors are subjected.

The contactless transmission can be compared to a capacitive coupling, i.e. a coupling capacitance $C_K$ is obtained between the transmitting antenna and the receiver antenna. Fig. 10 illustrates the equivalent circuit diagram for the entire system comprising the piezoelectric sensors, antennas, amplifier and the data collection. $R_i$ is the input resistance of the amplifier, which can be a charge or voltage amplifier. The value of $C_K$ will alter with respect to the relative position of the transmitting and receiving antennas. To compensate for the variation, the transmitter antennas can be made smaller than the receiver antennas, thus tracking the entire nip process. For obtaining a pressure value between the rolls, the signal from the sensor is traced from the moment the piezoelectric sensor is loaded until the sensor passes through the roller's nip. This requires that the extension of the receiver antennas is larger than the transmitter antennas. The transmitter antennas must be made small to allow incorporation into the conveyer material.

Fig. 11 is a cross sectional view through the conveyer 92 according to Fig. 9, illustrating the sensors 911, transmitting 913 and receiving antennas 916. The sensor extends into the plane of the drawing. For obtaining a good capacitive coupling between the transmitting and receiving antennas, the transmitting antennas must be spaced apart in such a way that minimum or null electrical field lines are between the transmitting antennas. The aim is that main part of the electrical field lines extends between the transmitter and receiver antennas pairs.

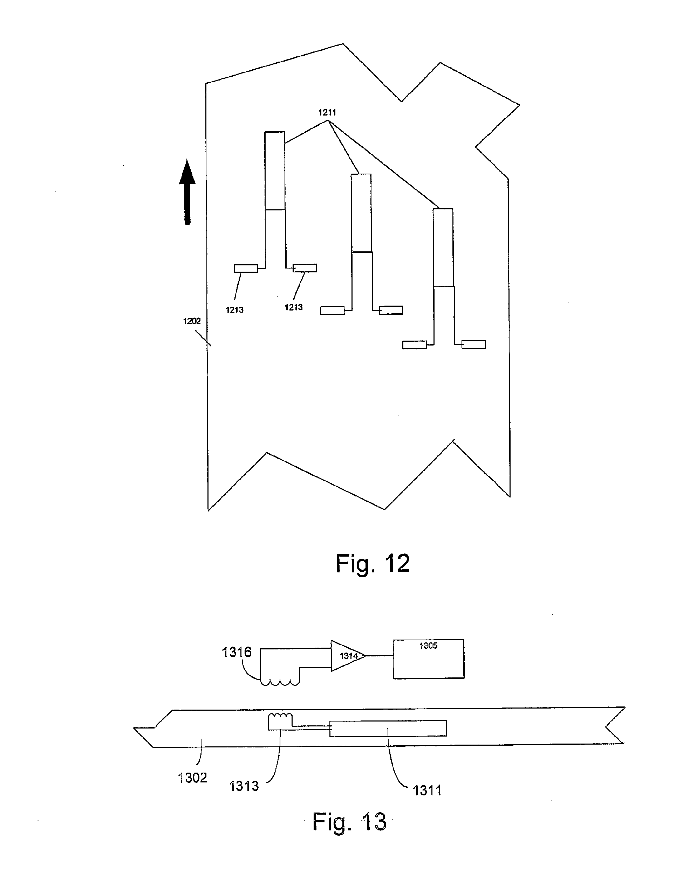

The piezoelectric sensors 1211 can be distributed in the conveyer 1202 as illustrated in Fig. 12. 1213 denote the transmitting antennas. The arrow shows the direction of motion of the conveyer. The overlapping arrangement of the sensors allows continues signal acquisition. However, the signal-processing unit must switch between the antennas to obtain relevant information. This embodiment allows measurement of pressure distribution in the width direction of the conveyer.

Having the length of each piezoelectric sensor, or the distances between the different sensors, start and end of each signal generated from each piezoelectric sensor allows computing the actual speed of the conveyer. Thus, it is also possible to detect if the belt or machine clothing has an askew motion, i.e. different speed at different parts.

Preferably, one receiving antenna is used for each transmitting antenna, however, if the signal level is strong enough and if it is possible to distinguish between the signals from different piezoelectric sensors, one antenna extending over the width of the conveyer will be enough.

Vibrations and flexures in the sensors may cause incorrect signal readouts; to reduce or eliminate the problem a differential signal between a loaded sensor, i.e. passing through the nip, and an unloaded sensor can be used. The technique implies that a differential signal between two adjacent sensors is generated. The same differential technique can be used to compensate for temperature variations. In this case two adjacent loaded and unloaded sensors can be used such that they have substantially same temperature. Thus, it is possible to measure temperature variations.

The capacitive transmission as described earlier can be substituted by an inductive transmission. In this case, as illustrated in Fig. 13, a coil 1313 is used as the transmitter instead of the antennas. The receiver antenna is substituted with another coil 1316, e.g. having a magnetic core to obtain stronger signal from the transmitter coil 1313. The receiver coil can be connected to an amplifier 1314 and a signal processor 1305, in the same way as described earlier.

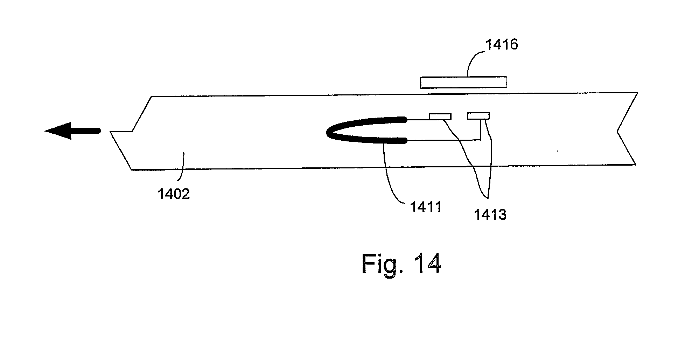

In yet another embodiment, as illustrated in Fig. 14, the piezoelectric sensor 1411 arranged inside the conveyer 1402 may be folded such that the piezoelectric sensor operates in a bending mod, which provides better signal level than thickness mod. The antennas 1413 connected at the ends of the sensor are thus arranged on one side of the sensor and in same level with respect to the receiver antenna 1416. The arrow indicates the motion direction of the conveyer.

The above-described embodiments are not limited to piezoelectric sensors but magneto-elastic material may also be used. In this case the sensor and the antenna may be the same, and an inductive detection is used.

In yet another embodiment a magnetic material acting as a core in an inductor can be incorporated in the conveyer while the receiver is arranged as a coil for recovering inductance changes.

In a paper manufacturing machine, for example, the resulting signals from the sensors are used to control the distance between the rolls and thus the pressure or nip pressure of the rolls, e.g. in real time by means of the computer.

Moreover, it is appreciated that the term "conveyer" considers any type of a carrying arrangement for different types of material and in any application not being depending on the material it is made of. It may also consider the material itself passing through the rolls.

**Claims**

1. A system for detecting at least one physical characteristic of an elastic structure (13, 22, 23, 32, 33, 92, 1202, 1302, 1402) subjected to a force under a motion, said structure being provided with at least one sensor (111, 112, 14, 211, 212, 311, 312, 911, 1211, 1311, 1411) comprising a first and a second electrode and a piezoelectric material provided in the form of a piezoelectric polymeric film, which upon deformation generates a charge displacement in the material giving rise to a voltage between said first and second electrodes being directly proportional to the force causing the deformation, said voltage being convertible to a signal representing said characteristic, and said system comprising at least one detector (16, 416, 516, 916, 1316, 1416) comprising a receiver for receiving said signal representing said characteristic, **characterised in that** said sensor further comprises a first sensor conductor being connected to said first electrode and a second sensor conductor spaced apart from said first sensor conductor being connected to said second electrode, said first and second sensor conductors (913, 1213, ) being arranged as antennas; and **in that** said detector comprises a receiver antenna arranged adjacent to said elastic structure for capacitively sensing said voltage between said first and second sensor conductors, thereby enabling determination of said characteristic.

2. The system of claim 1, wherein said structure is a flat structure.

3. The system according to claim 1, wherein said structure is a belt, a conveyer, a wire, a sheet material, a paper sheet, a fabric, a cloth, a printing paper, paper money, or bank notes, and said structure cooperates/interacts with at least one substantially cylindrical rotating body.

4. The system according to claim 3, wherein said at least one substantially cylindrical rotating body is a roll.

5. The system according to claim 4, wherein said structure cooperates/interacts with two rolls.

6. The system according to claim 4, wherein said structure cooperates/interacts with three rolls.

7. The system of claim 1, wherein said structure is a substantially cylindrical rotating structure.

8. The system according to claim 1, wherein the structure comprises a tyre.

9. The system according to claim 1, wherein the structure comprises a roll, a roller, a cylinder, a delivery bowl, rubber-covered cylinder, drum, or a hole cylinder.

10. The system according to claim 1, wherein the structure is a roll or a cylinder feeding a sheet material.

11. The system of claim 1, wherein said sensor, including the transmitter, is arranged on or inside said structure.

12. The system of claim 1, wherein said structure comprises an oblong structure passing through a pressing arrangement.

13. The system according to claim 1, wherein said structure is a conveyer shaped structure in a nip formed by rolls, and at least one sensor is arranged on the surface of the conveyer shaped structure or substantially within the conveyer shaped structure for detecting the pressure and pressure distribution in the nip between the rolls.

14. The system according to claim 13, wherein the nip is present in a nip roll, a roller press, an Yankee machine, a shoe press, or a smoothing coating machine of a paper-manufacturing machine.

15. The system according to claim 14, wherein the characteristic(s) detected is/are the nip force, nip pressure/pressure distribution and/or nip width of the rolls in a nip roll press.

16. The system of claim 1, wherein the sensor is arranged in one of or several of a longitudinal, radial or transversal direction of the structure.

17. The system of claim 1 or claim 16, wherein the sensor is arranged to provide one or several of absolute linear velocity or skid characteristic of the structure.

18. The system according to any one of claims 4-6, wherein the roll(s) is/are arranged in a paper-manufacturing machine, said structure is a belt or a conveyer, and sensors are arranged inside the material of the belt, either in the longitudinal and/or transverse direction of the belt.

19. The system according to any one of claims 4-6, wherein the roll(s) is/are arranged in a printer application, said structure is a printing paper, and at least one sensor is arranged on the surface of the printing paper or substantially within the printing paper.

20. The system according to claim 19, wherein the sensor comprises a foil integrated substantially inside the paper.

21. The system according to any one of claims 4-6, wherein the rolls are arranged in a banking paper application, said structure is bank notes or paper money, and the sensor is arranged as a strip on the surface of the bank note/paper money or substantially within the bank note/paper money.

22. The system of claim 1 or 21, wherein one or several sensors constitute(s) a bar code in the structure.

23. The system according to any one of claims 7-10, wherein the sensor deforms during a time period, whereby a part of the structure that contains the sensor is in contact with a surface, whereby during said time period, an electric signal (voltage/current pulse) is created, and a linear velocity of rotation is obtained if the length of the sensor is known by dividing this length by the duration of the voltage/current pulse.

24. The system of claim 23, wherein additional information is provided by a frequency at which pulses occur due to the rotation of the structure, both related to each other and to a linear velocity of the structure motion, and a difference in linear velocity of the structure calculated from the pulse duration and from the frequency of structure rotation varying in time indicates skid.

25. The system as claimed in any of the preceding claims, wherein the sensor is formed as a cable, a filament, a strip, a foil, a thread, a film, a particle or the like.

26. The system according to claim 1, wherein the receiver antenna comprises two conductive plates.

27. The system according to claim 1, wherein the receiver comprises a differential amplifier, an analogue-digital converter, and a signal-processing unit.

28. The system according to claim 1 or 26, wherein several sensors are placed in an overlapping arrangement in the structure allowing continuous signal acquisition and measurement of pressure distribution in the width direction of the structure.

29. The system according to claim 1 or 26, wherein the sensor comprises two conductors extending from the ends of the sensor, and the sensor being folded providing two shanks, one of which can be subjected to a force, such that the sensor operates in bending mode.

30. The system according to claim 26, wherein said first and second sensor conductors are spaced apart in such a way that minimum or null electric field lines are present between the first and second sensor conductors, and the main part of the electric field lines are present between each pair of sensor conductor and receiver antenna.

31. The system according to claim 26, wherein an extension of the receiver antennas is larger than an extension of the first and second sensor conductors.

32. The system according to claim 1 or 26, wherein one receiver antenna is used for each sensor conductor.

33. The system according to any one of the preceding claims, wherein the piezoelectric material is polyvinylidenfluoride (PVDF).

34. The system according to any one of the preceding claims, wherein a differential signal between a sensor subjected to said force and a sensor not being subjected to said force is used.

35. The system according to claim 34, wherein the differential signal technique is used to measure temperature variations.

36. A method of detecting at least one physical characteristic of an elastic structure (13, 22, 23, 32, 33, 92, 1202, 1302, 1402) subjected to a force under a motion using the system according to any one of claims 1-35, the method comprising the steps of:

> providing said structure with at least one sensor (111, 112, 14, 211, 212, 311, 312, 911, 1211, 1311, 1411) comprising a first and a second electrode and a piezoelectric polymeric film, which upon deformation generates a charge displacement in the material giving rise to a voltage between said first and second electrodes being directly proportional to the force causing the deformation, said voltage being convertible to a signal representing said characteristic, wherein said sensor further comprises a first sensor conductor being connected to said first electrode and a second sensor conductor spaced apart from said first sensor conductor being connected to said second electrode, said first and second sensor conductors (913, 1213 ) being arranged as antennas;
> · providing at least one detector (16, 416, 516, 916, 1316, 1416) comprising a receiver antenna, in such a way that said receiver antenna is arranged adjacent to said elastic structure; and
> capacitively sensing a voltage between said first and second sensor conductors by means of said receiver antenna, thereby enabling determination of said characteristic.

37. A sensor arrangement (111, 112, 14, 211, 212, 311, 312, 911, 1211, 1311, 1411) for incorporation into an elastic structure (13, 22, 23, 32, 33, 92, 1202, 1302, 1402) and for providing at least one physical characteristic of said structure when subjected to a force under a motion, said sensor comprising a first and a second electrode and a piezoelectric material provided in the form of a piezoelectric polymeric film, which upon deformation generates a charge displacement in the material giving rise to a voltage between said first and second electrodes being directly proportional to the force causing the deformation, said voltage being convertible to a signal representing said characteristic, **characterised in that** said sensor further comprises a first sensor conductor being connected to said first electrode and a second sensor conductor spaced apart from said first sensor conductor- being connected to said second electrode, said first and second sensor conductors (913, 1213) being arranged as antennas in such a way that capacitive sensing of said voltage between said first and said second sensor conductors is enabled when said sensor is incorporated in the elastic structure.

38. The sensor arrangement according to claim 37, wherein the sensor is formed as a cable, a filament, a strip, a foil, a thread, a film, a particle or the like.

39. The sensor arrangement according to claim 37, wherein said first and second conductors are spaced apart in such a way that minimum or null electric field lines are present between the first and second conductors.

40. The sensor arrangement according to any one of claims 37-39, wherein the piezoelectric material is polyvinylidenfluoride (PVDF).

41. A belt having a sensor arrangement according to any one of claims 37 to 40 embedded therein, thereby enabling detection of a force acting on said belt.

42. Use of a system according to any one of claim 1-35 in an apparatus comprising at least one substantially cylindrical rotating body feeding a sheet material for detecting at least one physical characteristic of said sheet material.

**43.** The use according to claim 42, wherein the movement, presence of material, rotation speed, and/or sliding characteristics is/are detected.

**44.** The use according to claim 42, wherein said sensor is used in a paper-manufacturing machine for detecting a characteristic of a belt or a conveyer cooperating/interacting with at least one substantially cylindrical rotating body feeding said belt, said sensor(s) being integrated into the belt/conveyer, either in the longitudinal and/or transverse direction of the belt.

**45.** The use according to claim 42, wherein said sheet material is a conveyer shaped structure in a nip formed by rolls, said sensor being arranged on the surface of the conveyer shaped structure or substantially within the conveyer shaped structure for detecting the pressure and pressure distribution in the nip between the rolls.

**46.** The use according to claim 45, wherein the nip is present in a nip roll, a roller press, an Yankee machine, a shoe press, or a smoothing coating machine of a paper-manufacturing machine.

**47.** The use according to claim 46, wherein the characteristic(s) detected is/are the nip force, nip pressure and/or nip width of the rolls in a nip roll press.

**48.** The use according to claim 42, wherein said sensor is used in a printer application for detecting a characteristic of a printing paper cooperating/interacting with at least one substantially cylindrical rotating body feeding said printing paper, said sensor(s) being arranged on the surface of the printing paper or substantially within the printer paper.

**49.** The use according to claim 42, wherein the sensor is used in a banking paper application for detecting a characteristic of bank notes or paper money cooperating/interacting with at least one substantially cylindrical rotating body feeding said bank notes/paper money, said sensor(s) being arranged on the surface of the bank notes/paper money or substantially within the bank notes/paper money.

**Patentansprüche**

**1.** System zum Erkennen mindestens eines physischen Charakteristikums einer elastischen Struktur (13, 22, 23, 32, 33, 92, 1202, 1302, 1402), die unter Bewegung einer Kraft ausgesetzt ist, wobei die Struktur mit mindestens einem Sensor (111, 112, 14, 211, 212, 311, 312, 911, 1211, 1311, 1411) ausgestattet ist, der eine erste und eine zweite Elektrode und ein piezoelektrisches Material umfasst, das in Form einer piezoelektrischen Polymerfolie bereitgestellt ist, die unter Verformung eine Ladungsverschiebung im Material erzeugt, die eine Spannung zwischen der ersten und der zweiten Elektrode bewirkt, die direkt proportional zu der Kraft ist, welche die Verformung bewirkt, wobei die Spannung in ein Signal umwandelbar ist, welches das Charakteristikum darstellt, und wobei das System mindestens einen Detektor (16, 416, 516, 916, 1316, 1416) umfasst, der einen Empfänger zum Empfangen des Signals, welches das Charakteristikum darstellt, umfasst,
**dadurch gekennzeichnet, dass** der Sensor ferner einen ersten Sensorleiter umfasst, der mit der ersten Elektrode verbunden ist, und einen zweiten Sensorleiter, der vom ersten Sensorleiter beabstandet und mit der zweiten Elektrode verbunden ist, wobei der erste und der zweite Sensorleiter (913, 1213) als Antennen angeordnet sind, und dadurch, dass der Detektor eine Empfangsantenne umfasst, die an die elastische Struktur angrenzend angeordnet ist, um die Spannung zwischen dem ersten Sensorleiter und dem zweiten Sensorleiter kapazitiv abzutasten, wodurch die Bestimmung des Charakteristikums ermöglicht wird.

**2.** System nach Anspruch 1, wobei die Struktur eine flache Struktur ist.

**3.** System nach Anspruch 1, wobei die Struktur ein Band, ein Förderband, ein Sieb, ein Bahnmaterial, ein Papierbogen, ein textiles Flächengebilde, ein Tuch, ein Druckpapier, Papiergeld oder Banknoten ist und wobei die Struktur mit mindestens einem im Wesentlichen zylindrischen Rotationskörper zusammenarbeitet/-wirkt.

**4.** System nach Anspruch 3, wobei der mindestens eine im Wesentlichen zylindrische Rotationskörper eine Walze ist.

**5.** System nach Anspruch 4, wobei die Struktur mit zwei Walzen zusammenarbeitet/-wirkt.

**6.** System nach Anspruch 4, wobei die Struktur mit drei Walzen zusammenarbeitet/-wirkt.

7. System nach Anspruch 1, wobei die Struktur eine im Wesentlichen zylindrische Rotationsstruktur ist.

8. System nach Anspruch 1, wobei die Struktur einen Reifen umfasst.

9. System nach Anspruch 1, wobei die Struktur eine Walze, eine Rolle, einen Zylinder, ein Zufuhrbecken, ein kautschukbedeckter Zylinder, eine Trommel oder ein Hohlzylinder ist.

10. System nach Anspruch 1, wobei die Struktur eine Walze oder ein Zylinder ist, die/der ein Bahnmaterial zuführt.

11. System nach Anspruch 1, wobei der Sensor, der den Sender beinhaltet, an oder innerhalb der Struktur angeordnet ist.

12. System nach Anspruch 1, wobei die Struktur eine längliche Struktur umfasst, die eine Pressanordnung durchläuft.

13. System nach Anspruch 1, wobei die Struktur eine förderbandähnliche Struktur in einem von Walzen gebildeten Spalt ist und mindestens ein Sensor auf der Oberfläche der förderbandähnlichen Struktur oder im Wesentlichen innerhalb der förderbandähnlichen Struktur angeordnet ist, um den Druck und die Druckverteilung im Spalt zwischen den Walzen zu erkennen.

14. System nach Anspruch 13, wobei der Spalt an einer Andruckwalze, in einer Rollenpresse, einer Yankee-Maschine, einer Schuhpresse oder einer glättenden Streichmaschine einer Papiermaschine vorhanden ist.

15. System nach Anspruch 14, wobei das erkannte Charakteristikum bzw. die erkannten Charakteristika die Spaltkraft, der Spaltdruck/ die Druckverteilung im Spalt und/oder die Walzenspaltbreite in einer Walzenpresse ist/sind.

16. System nach Anspruch 1, wobei der Sensor in einer oder mehreren der Längs-, Radial- oder Querrichtung der Struktur angeordnet ist.

17. System nach Anspruch 1 oder 16, wobei der Sensor dafür angeordnet ist, eine oder mehrere der absoluten linearen Geschwindigkeit oder der Gleiteigenschaft der Struktur bereitzustellen.

18. System nach einem der Ansprüche 4 bis 6, wobei die Walze(n) in einer Papiermaschine angeordnet ist/sind, wobei die Struktur ein Band oder ein Förderband ist und die Sensoren im Material des Bandes angeordnet sind, entweder in Längs und/oder in Querrichtung des Bandes.

19. System nach einem der Ansprüche 4 bis 6, wobei die Walze(n) in einer Druckeranwendung angeordnet ist/sind, wobei die Struktur ein Druckpapier ist und mindestens ein Sensor auf der Oberfläche des Druckpapiers oder im Wesentlichen innerhalb des Druckpapiers angeordnet ist.

20. System nach Anspruch 19, wobei der Sensor eine Folie umfasst, die im Wesentlichen in das Papier integriert ist.

21. System nach einem der Ansprüche 4 bis 6, wobei die Walzen in einer Bankenpapieranwendung angeordnet sind, wobei es sich bei der Struktur um Banknoten oder Papiergeld handelt und der Sensor als Streifen auf der Oberfläche der Banknote / des Papiergeldes oder im Wesentlichen in der Banknote / dem Papiergeld angeordnet ist.

22. System nach Anspruch 1 oder 21, wobei ein oder mehrere Sensoren einen Barcode in der Struktur bildet/bilden.

23. System nach einem der Ansprüche 7 bis 10, wobei der Sensor sich während einer Zeitspanne verformt, wodurch ein Teil der Struktur, der den Sensor enthält, in Kontakt mit einer Oberfläche steht, wodurch während der Zeitspanne ein elektrisches Signal (Spannungs-/Stromimpuls) erzeugt wird und eine lineare Geschwindigkeit der Rotation errechnet wird, wenn die Länge des Sensors bekannt ist, indem diese Länge durch die Dauer des Spannungs-/ Stromimpulses dividiert wird.

24. System nach Anspruch 23, wobei eine zusätzliche Information bereitgestellt ist durch eine Frequenz, mit der infolge der Rotation der Struktur Impulse auftreten, die sowohl zueinander in Beziehung stehen als auch zu einer linearen Geschwindigkeit der Bewegung der Struktur, und wobei eine Differenz in der linearen Geschwindigkeit der Struktur, die aus der Impulsdauer und aus der zeitlich veränderlichen Frequenz der Strukturrotation errechnet wird, ein Gleiten anzeigt.

**25.** System nach einem der vorhergehenden Ansprüche, wobei der Sensor als ein Kabel, ein Filament, ein Streifen, eine Folie, ein Faden, ein Film, ein Partikel oder dergleichen gebildet ist.

**26.** System nach Anspruch 1, wobei die Empfängerantenne zwei leitende Platten umfasst.

**27.** System nach Anspruch 1, wobei der Empfänger einen Differenzialverstärker, einen Analog-Digital-Wandler und eine Signalverarbeitungseinheit umfasst.

**28.** System nach Anspruch 1 oder 26, wobei mehrere Sensoren in überlappender Anordnung in der Struktur angeordnet sind, was eine kontinuierliche Signalerfassung und Druckverteilungsmessung in Breiterichtung der Struktur ermöglicht.

**29.** System nach Anspruch 1 oder 26, wobei der Sensor zwei Leiter umfasst, die sich von den Enden des Sensors aus erstrecken, und der Sensor durch Falten zwei Schenkel bereitstellt, von denen einer derart einer Kraft ausgesetzt werden kann, dass der Sensor im Biegemodus arbeitet.

**30.** System nach Anspruch 26, wobei der erste und der zweite Sensorleiter derart beabstandet sind, dass zwischen dem ersten und dem zweiten Sensorleiter minimale oder keine elektrischen Feldlinien vorhanden sind und der Hauptteil der elektrischen Feldlinien zwischen jedem Sensorleiterpaar und der Empfangsantenne vorhanden ist.

**31.** System nach Anspruch 26, wobei ein Ausmaß der Empfängerantenne größer als ein Ausmaß des ersten und des zweiten Sensorleiters ist.

**32.** System nach Anspruch 1 oder 26, wobei für jeden Sensorleiter eine Empfängerantenne verwendet wird.

**33.** System nach einem der vorhergehenden Ansprüche, wobei das piezoelektrische Material Polyvinylidenfluorid (PVDF) ist.

**34.** System nach einem der vorhergehenden Ansprüche, wobei ein Differenzsignal zwischen einem Sensor, welcher der Kraft ausgesetzt ist, und einem Sensor, welcher der Kraft nicht ausgesetzt ist, verwendet wird.

**35.** System nach Anspruch 34, wobei die Differenzsignaltechnik angewandt wird, um Temperaturabweichungen zu messen.

**36.** Verfahren zum Erkennen mindestens eines physischen Charakteristikums einer elastischen Struktur (13, 22, 23, 32, 33, 92, 1202, 1302, 1402), die unter Bewegung einer Kraft ausgesetzt ist, mit Hilfe des Systems nach einem der Ansprüche 1 bis 35, wobei das Verfahren folgende Schritte umfasst:

Ausstatten der Struktur mit mindestens einem Sensor (111, 112, 14, 211, 212, 311, 312, 911, 1211, 1311, 1411), der eine erste und eine zweite Elektrode und eine piezoelektrische Polymerfolie umfasst, die unter Verformung eine Ladungsverschiebung im Material erzeugt, die eine Spannung zwischen der ersten und der zweiten Elektrode bewirkt, die direkt proportional zu der Kraft ist, welche die Verformung bewirkt, wobei die Spannung in ein Signal umwandelbar ist, welches das Charakteristikum darstellt, wobei der Sensor ferner einen ersten Sensorleiter umfasst, der mit der ersten Elektrode verbunden ist, und einen zweiten Sensorleiter, der von ersten Sensorleiter beabstandet und mit der zweiten Elektrode verbunden ist, wobei der erste und der zweite Sensorleiter (913, 1213) als Antennen angeordnet sind,
Bereitstellen mindestens eines Detektors (16, 416, 516, 916, 1316, 1416), der eine Empfangsantenne umfasst, derart, dass die Empfängerantenne an die elastische Struktur angrenzend angeordnet ist, und
kapazitives Abtasten einer Spannung zwischen dem ersten Sensorleiter und dem zweiten Sensorleiter, wodurch die Bestimmung des Charakteristikums ermöglicht wird.

**37.** Sensoranordnung (111, 112, 14, 211, 212, 311, 312, 911, 1211, 1311, 1411) zum Einbinden in eine elastische Struktur (13, 22, 23, 32, 33, 92, 1202, 1302, 1402) und zum Bereitstellen mindestens eines physischen Charakteristikums der Struktur, wenn diese unter Bewegung einer Kraft ausgesetzt ist, wobei der Sensor eine erste und eine zweite Elektrode und ein piezoelektrisches Material umfasst, das in Form einer piezoelektrischen Polymerfolie bereitgestellt ist, die unter Verformung eine Ladungsverschiebung im Material erzeugt, die eine Spannung zwischen der ersten und der zweiten Elektrode bewirkt, die direkt proportional zu der Kraft ist, welche die Verformung bewirkt, wobei die Spannung in ein Signal umwandelbar ist, welches das Charakteristikum darstellt,

**dadurch gekennzeichnet, dass** der Sensor ferner einen ersten Sensorleiter umfasst, der mit der ersten Elektrode verbunden ist, und einen zweiten Sensorleiter, der vom ersten Sensorleiter beabstandet und mit der zweiten Elektrode verbunden ist, wobei der erste und der zweite Sensorleiter (913, 1213) derart als Antennen angeordnet sind, dass das kapazitive Abtasten der Spannung zwischen dem ersten und dem zweiten Sensorleiter ermöglicht wird, wenn der Sensor in die elastische Struktur eingebunden ist.

38. Sensoranordnung nach Anspruch 37, wobei der Sensor als ein Kabel, ein Filament, ein Streifen, eine Folie, ein Faden, ein Film, ein Partikel oder dergleichen gebildet ist.

39. Sensoranordnung nach Anspruch 37, wobei der erste und der zweite Leiter derart beabstandet sind, dass zwischen dem ersten und dem zweiten Leiter minimale oder keine elektrischen Feldlinien vorhanden sind.

40. Sensoranordnung nach einem der Ansprüche 37 bis 39, wobei das piezoelektrische Material Polyvinylidenfluorid (PVDF) ist.

41. Band mit einer darin eingebetteten Sensoranordnung nach einem der Ansprüche 37 bis 40, wodurch das Erkennen einer auf das Band wirkenden Kraft ermöglicht wird.

42. Verwendung eines Systems nach einem der Ansprüche 1 bis 35 in einer Vorrichtung, die mindestens einen im Wesentlichen zylindrischen Rotationskörper umfasst, der ein Bahnmaterial zuführt, um mindestens ein physisches Charakteristikum des Bahnmaterials zu erkennen.

43. Verwendung nach Anspruch 42, wobei die Bewegung, das Vorhandensein von Material, die Rotationsgeschwindigkeit und/oder Gleitcharakteristika erkannt wird/werden.

44. Verwendung nach Anspruch 42, wobei der Sensor in einer Papiermaschine verwendet wird, um ein Charakteristikum eines Bandes oder Förderbandes zu erkennen, das mit mindestens einem im Wesentlichen zylindrischen Rotationskörper zusammenarbeitet/-wirkt, der das Band zuführt, wobei der/die Sensor(en) in das Band/Förderband integriert sind, entweder in Längs- und/oder in Querrichtung des Bandes.

45. Verwendung nach Anspruch 42, wobei das Bahnmaterial eine förderbandähnliche Struktur in einem von Walzen gebildeten Spalt ist, wobei der Sensor auf der Oberfläche der förderbandähnlichen Struktur und im Wesentlichen innerhalb der förderbandähnlichen Struktur angeordnet ist, um den Druck und die Druckverteilung im Spalt zwischen den Walzen zu erkennen.

46. Verwendung nach Anspruch 45, wobei der Spalt an einer Andruckwalze, in einer Rollenpresse, einer Yankee-Maschine, einer Schuhpresse oder einer glättenden Streichmaschine einer Papiermaschine vorhanden ist.

47. Verwendung nach Anspruch 46, wobei das erkannte Charakteristikum bzw. die erkannten Charakteristika die Spaltkraft, der Spaltdruck und/oder die Walzenspaltbreite in einer Walzenpresse ist/sind.

48. Verwendung nach Anspruch 42, wobei der Sensor in einer Druckeranwendung verwendet wird, um ein Charakteristikum eines Druckpapiers zu erkennen, das mit mindestens einem im Wesentlichen zylindrischen Rotationskörper zusammenarbeitet/-wirkt, der das Druckpapier zuführt, wobei der/die Sensor(en) auf der Oberfläche des Druckpapiers oder im Wesentlichen innerhalb des Druckpapiers angeordnet ist/sind.

49. Verwendung nach Anspruch 42, wobei der Sensor in einer Bankenpapieranwendung verwendet wird, um ein Charakteristikum von Banknoten oder Papiergeld zu erkennen, das mit mindestens einem im Wesentlichen zylindrischen Rotationskörper zusammenarbeitet/-wirkt, der die Banknoten/ das Papiergeld zuführt, wobei der/die Sensor(en) auf der Oberfläche der Banknoten/ des Papiergeldes oder im Wesentlichen innerhalb der Banknoten/ des Papiergeldes angeordnet ist/sind.

**Revendications**

1. Système de détection d'au moins une caractéristique physique d'une structure élastique (13, 22, 23, 32, 33, 92, 1202, 1302, 1402) soumise à une force en mouvement, ladite structure étant équipée d'au moins un détecteur (111, 112, 14, 211, 212, 311, 312, 911, 1211, 1311, 1411), comprenant une première et une seconde électrodes et un matériau piézoélectrique se présentant sous la forme d'un film polymérique piézoélectrique qui, lors de sa déformation, génère un déplacement de charge dans le matériau, ce qui crée entre lesdites première et seconde électrodes une tension qui est directement proportionnelle à la force causant la déformation, ladite tension étant convertible en un signal représentant ladite caractéristique, et ledit système comprenant au moins un détecteur (16, 416, 516, 916, 1316, 1416) comprenant un récepteur pour recevoir ledit signal représentant ladite caractéristique, **caractérisé en ce que** ledit détecteur comprend en outre un premier conducteur de détection connecté à ladite première électrode et un second conducteur de détection espacé dudit premier conducteur de détection et connecté à ladite seconde électrode, lesdits premier et second conducteurs de détection (913, 1213) se présentant sous forme d'antennes, et que ledit détecteur comporte une antenne de récepteur disposée de manière à être adjacente à ladite structure élastique pour faire une détection capacitive de ladite tension entre lesdits premier et second conducteurs de détection, ce qui permet la détermination de ladite caractéristique.

**2.** Système selon la revendication 1, dans lequel ladite structure est une structure plate.

**3.** Système selon la revendication 1, dans lequel ladite structure est une courroie, un convoyeur, un fil métallique, une feuille de matériau, une feuille de papier, un tissu, une toile, un papier d'impression, du papier monnaie ou des billets et ladite structure coopère/interagit avec au moins un corps rotatif sensiblement cylindrique.

**4.** Système selon la revendication 3, dans lequel au moins un corps rotatif sensiblement cylindrique est un rouleau.

**5.** Système selon la revendication 4, dans lequel ladite structure coopère/interagit avec deux rouleaux.

**6.** Système selon la revendication 4, dans lequel ladite structure coopère/interagit avec trois rouleaux.

**7.** Système selon la revendication 1, dans lequel ladite structure est une structure rotative sensiblement cylindrique.

**8.** Système selon la revendication 1, dans lequel la structure comprend un pneu.

**9.** Système selon la revendication 1, dans lequel la structure comprend un rouleau, une roulette, un cylindre, un bol de fourniture, un cylindre recouvert de caoutchouc, un tambour ou un cylindre creux.

**10.** Système selon la revendication 1, dans lequel la structure est un rouleau ou un cylindre apportant une feuille de matériau.

**11.** Système selon la revendication 1, dans lequel ledit capteur, y compris le transmetteur, est disposé sur ou dans ladite structure.

**12.** Système selon la revendication 1, dans lequel ladite structure comprend une structure oblongue passant dans un système de pressage.

**13.** Système selon la revendication 1, dans lequel ladite structure est une structure en forme de convoyeur dans un interstice formé par des rouleaux et au moins un détecteur est disposé sur la surface de la structure en forme de convoyeur ou sensiblement dans la structure en forme de convoyeur pour détecter la pression et la répartition de distribution dans l'interstice entre les rouleaux.

**14.** Système selon la revendication 13, dans lequel l'interstice est présent dans un rouleau exprimeur, une presse à rouleaux, une machine Yankee, une presse à chaussures ou une coucheuse lisseuse d'une machine de fabrication de papier.

**15.** Système selon la revendication 14, dans lequel la ou les caractéristiques détectées sont la force de pincement, la pression dans l'interstice/répartition de pression et/ou la largeur d'interstice entre les rouleaux dans une presse à rouleau exprimeur.

**16.** Système selon la revendication 1, dans lequel le détecteur est disposé dans un ou plusieurs sens parmi un sens longitudinal, radial ou transversal de la structure.

**17.** Système selon la revendication 1 ou 16, dans lequel le détecteur est disposé de manière à assurer une ou plusieurs caractéristiques parmi la caractéristique de vitesse linéaire absolue ou la caractéristique de patinage de la structure.

**18.** Système selon l'une quelconque des revendications 4 à 6, dans lequel le ou les rouleaux sont disposés dans une machine de fabrication de papier, ladite structure est une courroie ou un convoyeur et les détecteurs sont disposés dans le matériau de la courroie dans le sens longitudinal et/ou transversal de la courroie.

**19.** Système selon l'une quelconque des revendications 4 à 6, dans lequel le ou les rouleaux sont disposés dans une application d'imprimante, ladite structure est un papier d'impression et au moins un détecteur est disposé sur la surface du papier d'impression ou substantiellement dans le papier d'impression.

**20.** Système selon la revendication 19, dans lequel le détecteur comprend une pellicule intégrée substantiellement dans le papier.

**21.** Système selon l'une quelconque des revendications 4 à 6, dans lequel les rouleaux sont disposés dans une application de papier monnaie, ladite structure est des billets ou du papier monnaie et le détecteur est disposé sous forme d'une bande sur la surface du papier à billets/papier monnaie ou substantiellement dans le papier à billets/papier monnaie.

**22.** Système selon la revendication 1 ou 21, dans lequel un ou plusieurs détecteurs constituent un code barre dans la structure.

**23.** Système selon l'une quelconque des revendications 7 à 10, dans lequel le détecteur se déforme pendant une certaine période, une partie de la structure qui contient le détecteur est en contact avec une surface, ce qui a pour effet que, pendant ladite période, un signal électrique (impulsion de tension/courant) est créé et qu'une vitesse linéaire de rotation est obtenue, si la longueur du détecteur est connue, en divisant cette longueur par la durée de l'impulsion de tension/courant.

**24.** Système selon la revendication 23, dans lequel une information supplémentaire est fournie par une fréquence à laquelle les impulsions se manifestent suite à la rotation de la structure, à la fois en relation mutuelle et avec une vitesse linéaire de mouvement de la structure et une différence de vitesse linéaire de la structure calculée à partir de la durée d'impulsion et à partir de la fréquence de rotation de la structure variant dans le temps indique un patinage.

**25.** Système selon l'une quelconque des revendications précédentes, dans lequel le détecteur se présente sous forme d'un câble, d'un filament, d'une bande, d'une pellicule, d'un fil, d'un film, d'une particule ou similaire.

**26.** Système selon la revendication 1, dans lequel l'antenne du récepteur comprend deux plaques conductrices.

**27.** Système selon la revendication 1, dans lequel le récepteur comprend un amplificateur différentiel, un convertisseur analogique/numérique et une unité de traitement de signaux.

**28.** Système selon la revendication 1 ou 26, dans lequel plusieurs détecteurs sont disposés en chevauchement dans la structure, ce qui permet une acquisition continue des signaux et une mesure de la distribution de pression dans le sens de la largeur de la structure.

**29.** Système selon la revendication 1 ou 26, dans lequel le détecteur comprend deux conducteurs s'étendant depuis les extrémités du détecteur et le détecteur plié forme deux tiges dont une peut être soumise à une force, de sorte que le détecteur opère en mode fléchissement.

**30.** Système selon la revendication 26, dans lequel lesdits premier et second conducteurs de détection sont espacés de manière à ce que des lignes de champ électrique minimal ou nul soient présentes entre les premier et second conducteurs de détection et que la majeure partie des lignes de champ électrique soient présentes entre chaque paire constituée par un conducteur de détection et une antenne de récepteur.

**31.** Système selon la revendication 26, dans lequel une extension des antennes du récepteur est plus importante qu'une extension des premier et second conducteurs de détection.

**32.** Système selon la revendication 1 ou 26, dans lequel une antenne de récepteur est utilisée pour chaque conducteur de détection.

**33.** Système selon l'une quelconque des revendications précédentes, dans lequel le matériau piézoélectrique est un fluorure de polyvinylidène (PVDF).

**34.** Système selon l'une quelconque des revendications précédentes, dans lequel un signal différentiel entre un détecteur soumis à ladite force et un détecteur non soumis à ladite force est utilisé.

**35.** Système selon la revendication 34, dans lequel la technologie des signaux différentiels et utilisée pour mesurer les variations de température.

**36.** Procédé de détection d'au moins une caractéristique physique d'une structure élastique (13, 22, 23, 32, 33, 92, 1202, 1302, 1402) soumise à une force en mouvement en utilisant le système selon l'une quelconque des revendications 1 à 35, ce procédé comprenant les étapes consistant à :

pourvoir ladite structure d'au moins un détecteur (111, 112, 14, 211, 212, 311, 312, 911, 1211, 1311, 1411), comprenant une première et une seconde électrodes et un film polymérique piézoélectrique qui, lors de sa déformation, génère un déplacement de charge dans le matériau, ce qui crée entre lesdites première et seconde électrodes une tension qui est directement proportionnelle à la force causant la déformation, ladite tension étant convertible en un signal représentant ladite caractéristique, ledit système comprenant au moins un premier conducteur de détection connecté à ladite première électrode et un second conducteur de détection espacé dudit premier conducteur de détection et connecté à ladite seconde électrode, lesdits premier et second conducteurs de détection (913, 1213) se présentant sous forme d'antennes,
prévoir au moins un détecteur (16, 416, 516, 916, 1316, 1416) comportant une antenne de récepteur de manière à ce que ladite antenne de récepteur soit adjacente à ladite structure élastique et
faire une détection capacitive d'une tension entre lesdits premier et second conducteurs de détection au moyen de ladite antenne de récepteur, ce qui permet de déterminer ladite caractéristique.

**37.** Système de détection (111, 112, 14, 211, 212, 311, 312, 911, 1211, 1311, 1411) destiné à être incorporé dans une structure élastique (13, 22, 23, 32, 33, 92, 1202, 1302, 1402) et à assurer au moins une caractéristique physique de ladite structure lorsqu'elle est soumise à une force en mouvement, ledit capteur comprenant une première et une seconde électrodes et un matériau piézoélectrique se présentant sous la forme d'un film polymérique piézoélectrique qui, lors de sa déformation, génère un déplacement de charge dans le matériau, ce qui crée entre lesdites première et seconde électrodes une tension qui est directement proportionnelle à la force causant la déformation, ladite tension étant convertible en un signal représentant ladite caractéristique, **caractérisé en ce que** ledit capteur comprend en plus un premier conducteur de détection connecté à ladite première électrode et un second conducteur de détection espacé dudit premier conducteur de détection et connecté à ladite seconde électrode, lesdits premier et second conducteurs de détection (913, 1213) se présentant sous forme d'antennes, de manière à ce que la détection capacitive de ladite tension entre lesdits premier et second conducteurs de détection devienne possible lorsque ledit capteur est incorporé dans la structure élastique.

**38.** Système de détection selon la revendication 37, dans lequel le capteur se présente sous forme d'un câble, d'un filament, d'une bande, d'une pellicule, d'un fil, d'un film, d'une particule ou similaire.

**39.** Système de détection selon la revendication 37, dans lequel lesdits premier et second conducteurs sont espacés de manière à ce que des lignes de champ électrique minimal ou nul soient présents entre les premier et second conducteurs.

**40.** Système de détection selon l'une quelconque des revendications 37 à 39, dans lequel le matériau piézoélectrique est du fluorure de polyvinylidène (PVDF).

**41.** Courroie dotée d'un système de capteur selon l'une quelconque des revendications 37 à 40 qui est encastré dedans, ce qui permet la détection d'une force agissant sur ladite courroie.

**42.** Utilisation d'un système selon l'une quelconque des revendications 1 à 35 dans un appareil comprenant au moins un corps rotatif sensiblement cylindrique apportant une feuille de matériau pour détecter au moins une caractéristique physique de ladite feuille de matériau.

**43.** Utilisation selon la revendication 42, dans laquelle le mouvement, la présence de matériau, la vitesse de rotation et/ou les caractéristiques de glissement est ou sont détectées.

**44.** Utilisation selon la revendication 42, dans laquelle ledit détecteur est utilisé dans une machine de fabrication de papier pour détecter une caractéristique d'une courroie ou d'un convoyeur coopérant/interagissant avec au moins un corps rotatif sensiblement cylindrique alimentant ladite courroie, ledit ou lesdits capteurs étant intégrés dans la courroie/le convoyeur dans le sens longitudinal et/ou transversal de la courroie.

**45.** Utilisation selon la revendication 42, dans laquelle ladite feuille de matériau est une structure en forme de convoyeur dans un interstice formé par des rouleaux, ledit capteur étant disposé sur la surface de la structure en forme de convoyeur ou sensiblement dans la structure en forme de convoyeur pour détecter la pression et la distribution de pression dans l'interstice entre les rouleaux.

**46.** Utilisation selon la revendication 45, dans laquelle l'interstice est présent dans un rouleau exprimeur, une presse à rouleaux, une machine Yankee, une presse à chaussures ou une coucheuse lisseuse d'une machine de fabrication de papier.

**47.** Utilisation selon la revendication 46, dans laquelle la ou les caractéristiques détectées sont la force de pincement, la pression dans l'interstice et/ou la largeur d'interstice des rouleaux dans une presse à rouleaux exprimeurs.

**48.** Utilisation selon la revendication 42, dans laquelle ledit capteur est utilisé dans une application d'imprimante pour détecter une caractéristique d'un papier d'impression coopérant/agissant avec au moins un corps rotatif sensiblement cylindrique alimentant ledit papier d'impression, ledit ou lesdits capteurs étant disposés sur la surface du papier d'impression ou sensiblement dans le papier d'impression.

**49.** Utilisation selon la revendication 42, dans laquelle le capteur est utilisé dans une application de papier fiduciaire pour la détection d'une caractéristique de billets ou de papier monnaie coopérant/interagissant avec au moins un corps rotatif sensiblement cylindrique apportant lesdits billets/papier monnaie, ledit ou lesdits capteurs étant disposés sur la surface des billets/du papier monnaie ou sensiblement dans les billets/le papier monnaie.

EP 1 583 671 B1

FIG.1a

FIG.1b

FIG.2

FIG.3

416

FIG.4a

FIG.4b

FIG.5a

FIG.5b

Fig. 6

Fig. 7

Fig. 8

Fig. 9

Data collection

Fig. 10

Fig. 11

**Fig. 12**

**Fig. 13**

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0002741 A
- US 6105423 A
- US 4862486 A
- JP 04254730 A
- US 5546070 A
- DE 19745734 A1
- FR 2645799 A
- US 5559437 A
- US 6005388 A

- WO 02066239 A
- US 5562027 A
- US 20030144119 A
- EP 0538221 A
- DE 19920133
- WO 03027623 A
- US 5821433 A
- US 6370961 B
- GB 1596284 A